# EUROPEAN PATENT SPECIFICATION

(11) **EP 4 529 206 B1**
(45) Date of publication and mention of the grant of the patent: **18.11.2026**
(21) Application number: 23198342.0
(22) Date of filing: 19.09.2023
(51) Int. Cl.: H04Q 11/00

(54) **RESTORATION OF NETWORK TRAFFIC UPON THE DISCOVERY OF AN ERROR IN A PARTICULAR PASSIVE OPTICAL NETWORK, PON**
WIEDERHERSTELLUNG DES NETZWERKVERKEHRS BEI DER ERKENNUNG EINES FEHLERS IN EINEM BESTIMMTEN PASSIVEN OPTISCHEN NETZWERK, PON
RESTAURATION DU TRAFIC DE RÉSEAU LORS DE LA DÉTECTION D'UNE ERREUR DANS UN RÉSEAU OPTIQUE PASSIF, PON, PARTICULIER

(43) Date of publication of application: 26.03.2025
(73) Proprietor: Nokia Solutions and Networks Oy, 02610 Espoo (FI)
(72) Inventor: Loodts, Benny, 2300 Turnhout (BE); Boonen, Jan Edgard, 1981 Hofstade (BE); Den Haese, Cedric Dirk M, 9090 Melle (BE)
(74) Representative: Auger, Hannah Maria

(56) References cited:
- DEZHI (JAMES) ZHANG CHINA TELECOM P R CHINA: "Higher Speed Passive Optical Networks: Requirements;TDxx/WP1", vol. 2/15, 14 March 2019 (2019-03-14), pages 1 - 42, XP044264539, Retrieved from the Internet <URL:https://www.itu.int/ifa/t/2017/sg15/exchange/wp1/q2/G.hsp.req-editing/EditingFolder/G.hsp.req draft 20190314.docx> [retrieved on 20190314]
- "Higher Speed Passive Optical Networks: Requirements - Amendment 1; G.9804.1 (2019) Amendment 1 (08/21)", no. G.9804.1 (2019) Amendment 1 (08/21), 6 August 2021 (2021-08-06), pages 1 - 70, XP044319479, Retrieved from the Internet <URL:http://mirror2.itu.int/dms/pay/itu-t/rec/g/T-REC-G.9804.1-202108-I!Amd1!PDF-E.pdf> [retrieved on 20210930]
- ZTE: "Combo PON Technical White Paper", 8 September 2022 (2022-09-08), pages 1 - 17, XP093138385, Retrieved from the Internet <URL:https://www.zte.com.cn/content/dam/zte-site/res-www-zte-com-cn/mediares/zte/files/pdf/white_book/Combo_PON_Technical_White_Paper-EN2125.pdf> [retrieved on 20240306]

## Description

### Field

Example embodiments may relate to systems, methods and/or computer programs for switching passive optical networks, PONs. In particular, example embodiments may relate to switching a PON that is in use from a first PON to a second PON in the event that an error occurs in the first PON.

### Background

A passive optical network (PON) is a type of fiber-optic access network. A PON may include a transport node such as an optical line terminal (OLT) at a central office (CO) and a number of transport units such as optical network units (ONUs), also known as optical network terminals (ONTs), located at or near subscribers' premises (e.g., home, office building, etc.). An OLT can consist of one or multiple ports, each port serving a PON to which one or multiple ONUs can be connected.

Packets of information are transmitted back and forth between the OLTs and the ONUs via PONs to provide various services. These packets of information may be transmitted in various wavelength bands according to associated PON access technologies. Example technologies include GPON, XGS, 2.5G, 10G, 25G, 50G or 100G. Multiple different technologies may be implemented at the same PON port concurrently. In this scenario, multi-PON module (MPM) optics are used to support multiple technologies active at the same time.

Upon an error occurring in an in use (active) PON, network traffic may be interrupted. Network traffic needs to be restored as soon as possible to avoid disruption to services relying on said network traffic.

Deshi (James) Zhang, China Telecom, PR Chin, "Higher Speed Passive Optical Networks: Requirements; TD xx/WP1" ITU-T Draft; Study Period 2017-2020; Study Group 15; Series TDXX/WP1, International Telecommunication union, Geneva, vol 2/15, 14 March 2019, pages 1-42, XP044264539 discloses developments of higher speed PON systems by identifying sets of applications that can be addressed by a particular system and defining the requirements for each of those systems. "Higher Speed Passive Optical Networks: Requirements - Amendment 1; G.9804.1 (2019) Amendment 1 (08/21)" ITU-T Standard G.9804.1, International Telecommunication union, Geneva, no. G9804.1 (2019), pages 1-70, XP044319479 discloses development of higher speed PON systems by identifying sets of applications that can be addressed by a particular system and defining the requirements for each of those systems,

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described an apparatus according to claim 1 of the appended set of claims.

In some embodiments, the error that has occurred in the PON1 comprises the PON1 being wholly or partially unable to transmit upstream or downstream messages on its active Type1 PON technology.

In some embodiments, the error comprises at least one of the following: a physical disturbance to a fiber optical cable of PON1, a failure of a fiber optical cable of PON1, the planned turning off of PON1, a failure of a connection port of a fiber optical cable of PON1, or a malfunction of software or a power supply relating to PON1.

In some embodiments, Type1 PON technology and/or Type2 PON technology corresponds to one of the following PON access technologies: GPON, XGS, 2.5G, 10G, 25G, 50G or 100G.

In some embodiments, the means for detecting that the error has occurred comprises means for monitoring at least one uplink signal received by the PON1.

In some embodiments, the Type1 PON technology is suitable for transmitting at least one signal having a first wavelength and the Type2 PON technology is suitable for transmitting at least one signal having a second wavelength, the first wavelength and the second wavelength being different.

The apparatus may further comprise at least one processor and at least one memory including instructions, the at least one memory and the instructions configured to, with the at least one processor, cause the apparatus to: determine that the error has occurred in the PON1; instruct PON2, upon detection that the error has occurred, to activate the Type1 PON technology.

According to a second aspect, there is described a system comprising the aforementioned apparatus according to the first aspect, and the first passive optical network, PON1, and the second passive optical network, PON2.

According to a third aspect, there is described a method according to claim 9 of the appended set of claims.

In some embodiments, the error that has occurred in the PON1 comprises the PON1 being wholly or partially unable to transmit upstream or downstream messages on its active Type1 PON technology.

In some embodiments, the error comprises at least one of the following: a physical disturbance to a fiber optical cable of PON1, a failure of a fiber optical cable of PON1, the planned turning off of PON1, a failure of a connection port of a fiber optical cable of PON1, or a malfunction of software or a power supply relating to PON1.

In some embodiments, Type1 PON technology and/or Type2 PON technology corresponds to one of the following PON access technologies: GPON, XGS, 2.5G, 10G, 25G, 50G or 100G.

In some embodiments, determining that the error has occurred comprises monitoring at least one uplink signal received by the PON1.

According to a fourth aspect, there is provided a computer program according to claim 14 of the appended set of claims.

### Brief Description of the Drawings

Example embodiments will now be described by way of non-limiting example, with reference to the accompanying drawings, in which:
Fig. 1 shows, by way of example, a network configuration comprising an apparatus and a first and second PON, PON1 and PON2.
Fig. 2 shows, by way of example, a graph depicting the wavelength bands used by different access technologies.
Fig. 3 shows, by way of example, a network configuration according to a first embodiment.
Fig. 4 shows, by way of example, a network configuration according to a second embodiment.
Figs. 5A-5C show, by way of example, various network configurations.
Figs. 6A-6C show, by way of example, various network configurations making use of different access technologies.
Fig. 7 shows, by way of example, a network configuration according to a third embodiment, according to the prior art, prior to an error in PON A.
Fig. 8 shows, by way of example, a network configuration, also according to the third embodiment, according to the prior art, after an error in PON A.
Fig. 9 shows, by way of example, a network configuration, according to the third embodiment, according to the prior art, after an error in PON A.
Fig. 10 shows, by way of example, a network configuration according to a fourth embodiment.
Fig. 11 shows, by way of example, a network configuration, also according to the fourth embodiment.
Fig. 12 shows, by way of example, a network configuration, also according to the fourth embodiment.
Fig. 13 shows, by way of example, a network configuration, according to a fifth embodiment.
Figs. 14A and 14B show, by way of example, various network configurations, also according to the fifth embodiment, after an error in PON B.
Fig. 15 shows, by way of example, a flowchart of a method.
Fig. 16 shows, by way of example, a block diagram of an apparatus.

### Detailed Description

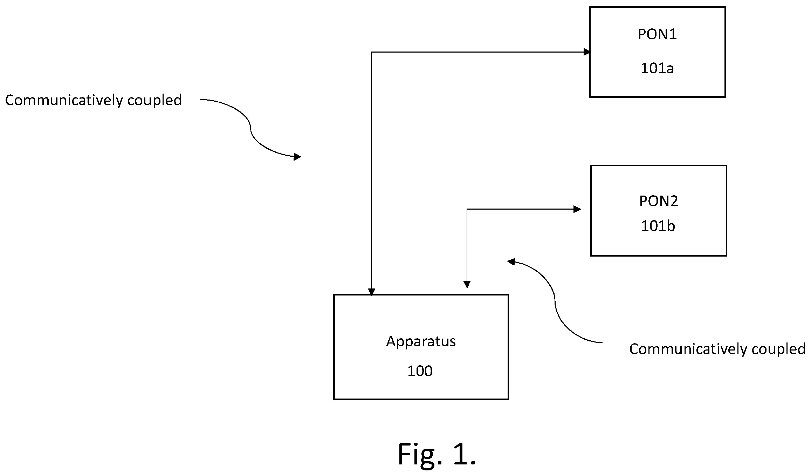

Figure 1 shows a network configuration comprising an apparatus 100 and a first passive optical network, PON1, 101a and a second passive optical network, PON2, 101b and an apparatus communicatively coupled to both PON1 101a and PON2 101b.

Example embodiments may relate to apparatuses, systems, methods and/or computer programs for improving the switching of active PONs upon the discovery of an error in a particular PON.

A packet in this context is a formatted unit of data carried by a packet-switched network. A packet consists of control information (or header) and user data (or payload). Control information provides data for delivering the payload (e.g., source and destination network addresses, error detection codes, or sequencing information). During operation of a PON, a continuous data stream made up of packets of information may be transmitted downstream from an OLT to various ONTs (also known as ONUs) or transmitted upstream from various ONTs to the OLT.

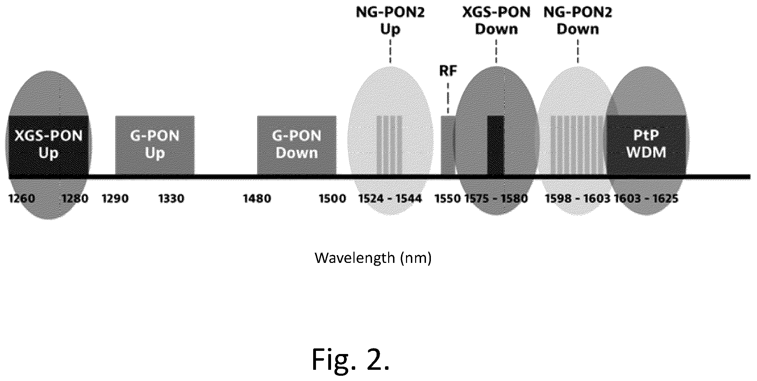

Figure 2. shows a graph depicting the different wavelength bands of different standard PON access technologies (also referred to simply as PON technologies herein). As can be seen from the graph, each standard, for instance XGS-PON, has its own distinct upstream wavelength band and downstream wavelength band. Upstream in this context refers to packets of information transmitted from an ONT to an OLT and downstream refers to packets of information transmitted from an OLT to an ONT.

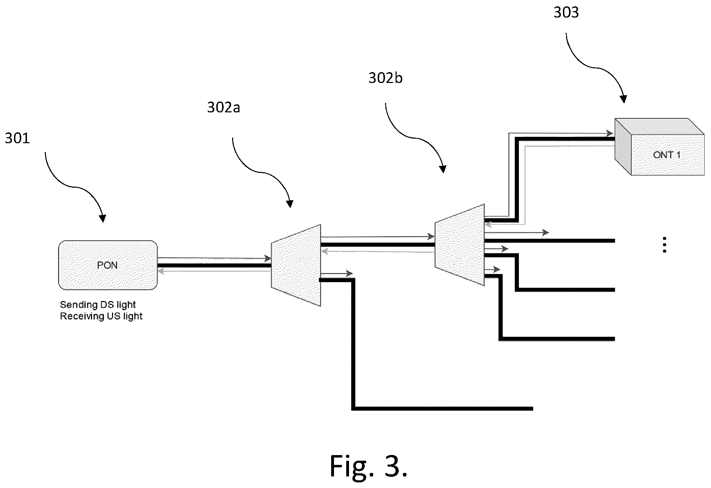

Figure 3 depicts an example network configuration. Packets of information are sent back and forth from an ONT 303 to a PON 301. Various splitters 302, 302b may be used to take an input signal and divide it into multiple signals. Such splitters 302a and 302b allow multiple ONTs/ONUs to use the same shared port at a PON 301. Although one ONT 303 is shown, the amount of ONTs is scalable through the use of various splitters 302a, 302b. One PON 301 may carry as many as, for instance, 128 ONTs per port at a PON, although higher numbers of ONTs are also contemplated.

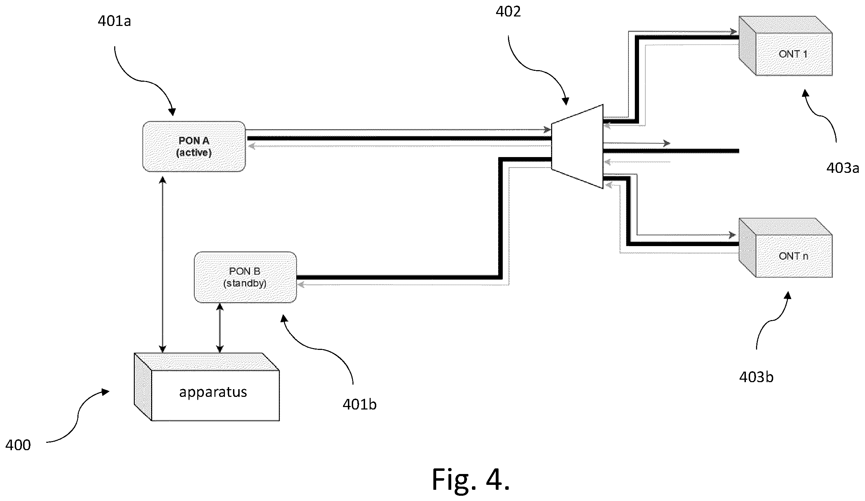

Figure 4 depicts an example generic network configuration comprising an apparatus 400 two PONs 401a, and 401b, a splitter 402, and two ONTs - ONT 403a and ONT 403b. PON A is active, meaning that signals are being transmitted back and forth between PON 401a and ONTs 403a and 403b. PON 401b is in a standby mode, awaiting a control signal to activate PON 401b for use in transporting network traffic.

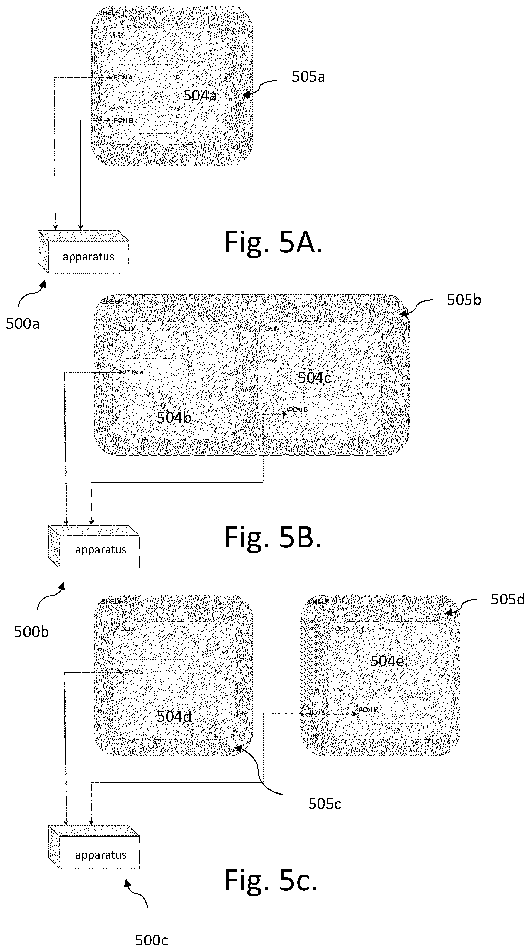

Figures 5A. 5B, and 5C show various example network configurations comprising multiple PONs an accordance with embodiments of the present disclosure. In some embodiments, as show in Figure 5A, both PON A and PON B may be part of a same OLT 504a on a same shelf 505a. A shelf in this context is a unit of equipment comprising an NT (network termination) and multiple LTs (line terminations). A plurality of shelves may work together/communicate to control aspects of the network as a whole. In some embodiments, as shown in Figure 5B, PON A may be part of a first OLT 504b and PON B may be part of a second OLT 504c, wherein both OLT 504b and 504c are on a same shelf 505b. In some embodiments, PON A is part of a first OLT 504d on a shelf 505c and PON B is part of a second OLT 504e on a second shelf 505d.

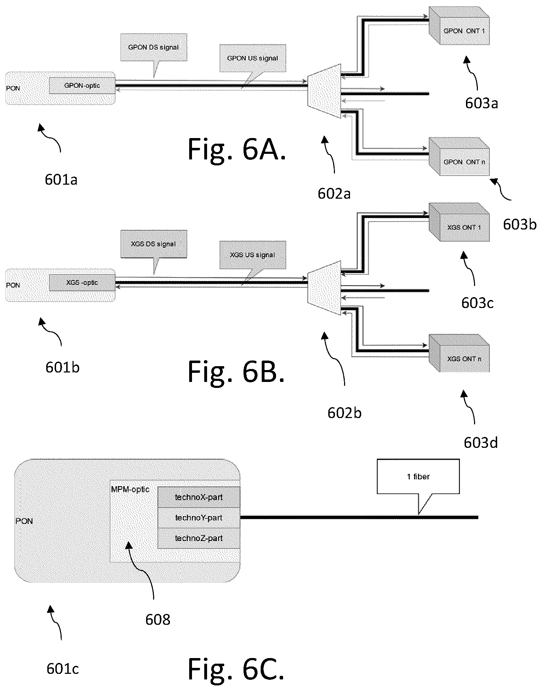

Figures 6A, 6B, and 6C show various example network configurations. Figure 6A shows a network configuration comprising a PON 601a, a splitter 602a, and two ONTs 603a and 603b. PON 601a and ONTs 603a and 603b support the GPON PON access technology. Packets of information are being sent back and forth from the ONTs 603a and 603b and the PON 601a via the wavelength bands associated with GPON. Figure 6B shows a network configuration comprising a PON 601b, a splitter 602b, and two ONTs 603c and 603d. In this example, PON 601b and ONTs 603c and 603d support the XGS PON access technology, therefore, packets of information are being sent back and forth from the

ONTs 603c and 603d and the PON 601d via the wavelength bands associated with XGS. Figure 6C depicts a network configuration comprising a PON 601c. PON 601c supports three different PON access technologies, wherein network traffic corresponding to each PON access technology is transported via the same fiber to the PON 601c. In order to support multiple types of PON technology at PON 601c using the same fiber, an MPM optic 701b is used to perform optical multiplexing/demultiplexing of the network traffic corresponding to each of the different PON access technologies . Although PON 601c supports three PON access technologies, it will be understood that a PON 601c may support any number of PON access technologies.

Example embodiments may relate to apparatuses, systems, methods and/or computer programs for the switching of active PONs upon the discovery of an error in a particular PON. One method of dealing with such errors that lead to a particular PON being unsuitable for transporting the relevant network traffic is referred to as Type B protection/functionality as outlined in the ITU-T G.984.1 standard specification.

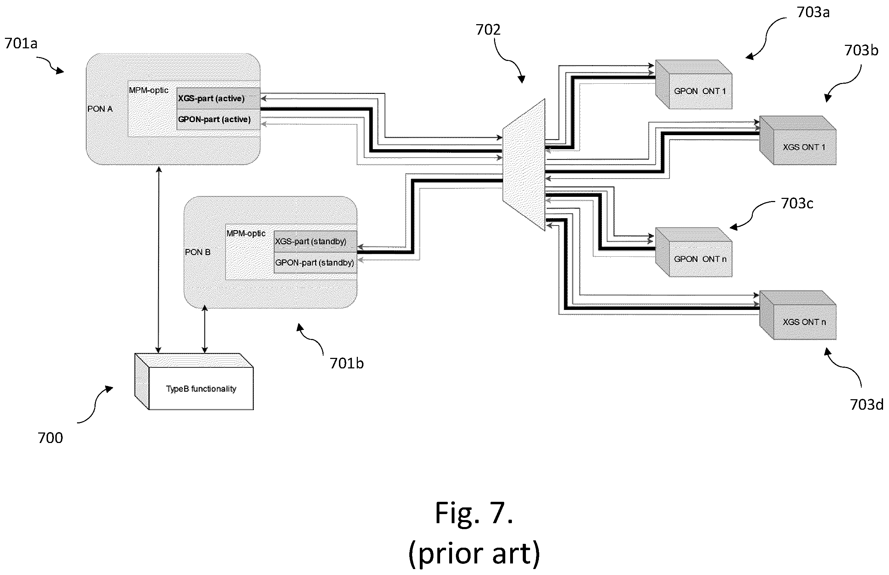

Figure 7 shows an example network configuration comprising an apparatus 700 using Type B functionality in accordance with the prior art. Figure 7 shows the network configuration at a first instance in time. The network configuration further comprises a first PON 701a and a second PON 701b, a splitter 702, and four ONTs, 703a, 703b, 703c, and 703d. ONTs 703a and 703c are configured to operate using the GPON standard PON access technology. ONTs 703b and 703d are configured to operate using the XGS standard PON access technology. Network traffic from all of the ONTs 703a-d is being routed through PON 701a, which is active for both XGS and GPON technologies. Upstream and downstream signals are sent between PON 701a and the ONTs 703a-d. PON 701b is in 'standby' mode for both XGS and GPON technologies. 'Standby' mode means that the PON 701b is not receiving or transmitting signals either upstream or downstream. Signals may be sent from the ONTs 703a-d (as shown in Figure 7), however, these are not received or processed by PON 701b.

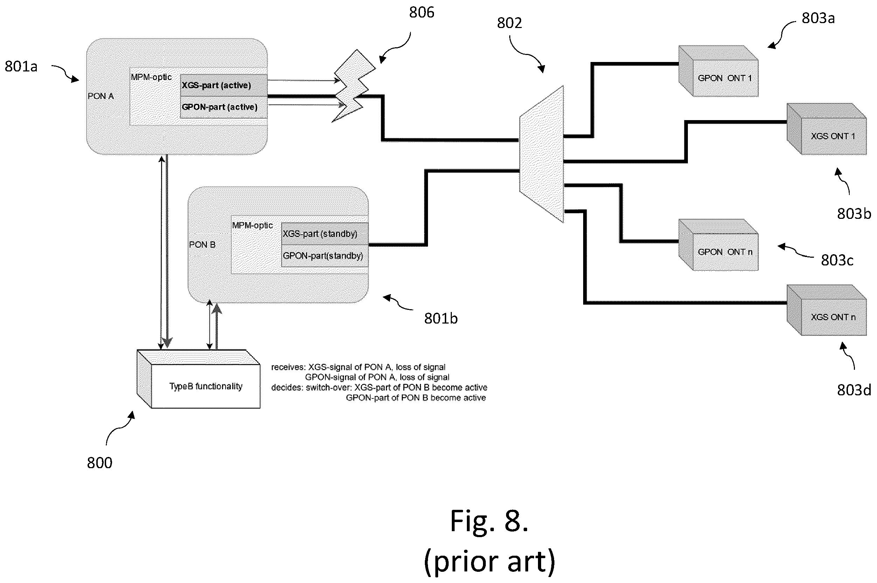

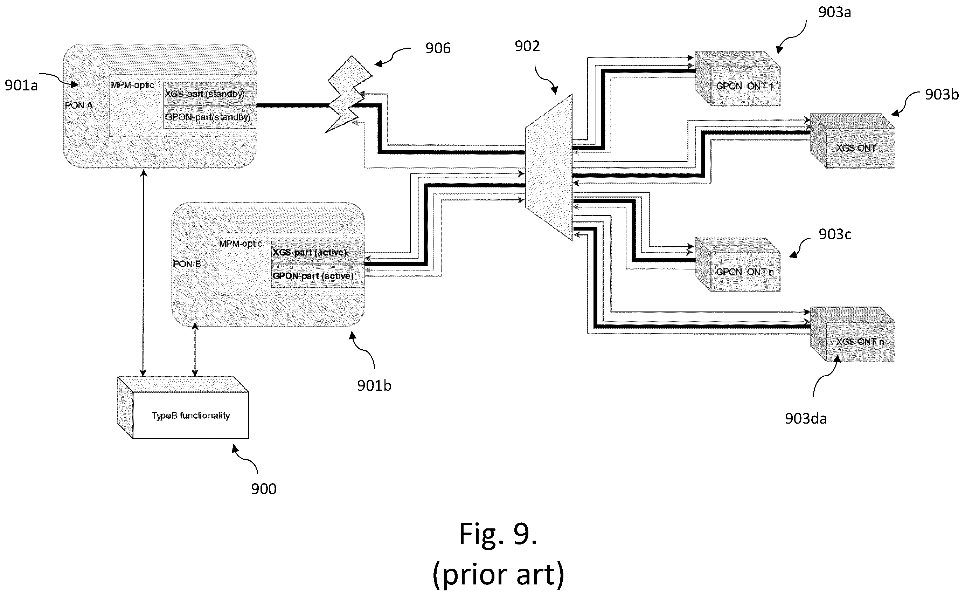

Figure 8 depicts the network configuration of Figure 7 in accordance with the prior art in the event of an error 806 occurring at PON 801a that prevents traffic from being successfully transported via PON 801a. Figure 8 shows the network configuration at a second instance in time which is later than the first instance in time. Corresponding reference numerals (i.e. 701a and 801a) show the same elements of the network configuration at a later stage in the process of determining and remedying an error. Apparatus 800, receives a signal from PON 801a indicating a loss of XGS signal to PON 801a and indicating a loss of GPON signal to PON 801a. Apparatus 800, in response to this signal, decides to switch the active PON for the XGS and GPON PON technologies from PON 801a to PON 801b in order to restore the flow of network traffic. As shown in Figure 9, both technologies are active on PON 901b after the switch and network traffic is restored via PON 901b. Figure 9 shows the network at a third instance in time which is later than the second instance in time. Corresponding reference numerals (i.e. 901a and 801a) show the same elements of the network configuration at a later stage in the process of determining and remedying an error.

The switch to restore the flow of traffic needs to be performed as fast as possible to avoid disruption to the network. This switch over is labor intensive, with the computational strain being variable based on the PON access technology being switched. For large PONs, the switchover is a real challenge, for instance, where a PON carries 128 ONTs. The switch-over algorithm is computationally expensive, and limited resources are available to make the switch between PONs. Furthermore, time constraints for making the switch without disruption to the services being provided by the network are strict, thus a large transition event with only limited resources being available may cause disruption. For large systems comprising many PONs, this problem is exacerbated. For example, in such large systems, up to 32 PONs can be switched over simultaneously in the event of a large failure (each carrying up to 128 ONTs). This process can put strain on available resources and risks interrupting services making use of the network.

The present disclosure relates to apparatuses, systems, methods and/or computer programs for the restoration of network traffic upon the discovery of an error in a particular PON that put reduced strain on available computational resources and therefore ensure reduced disruption to the network. The present disclosure may be considered to represent improved Type B functionality.

Referring back to Figure 1, the apparatus 100 comprises a first connection for connecting the apparatus 100 to PON1 101a. Via the first connection, apparatus 100 and PON1 101a are communicatively coupled, e.g. via a fiber optic connection. PON1 supports at least one type of PON access technology, Type 1, which may in some embodiments be one of GPON, XGS, 2.5G, 10G, 25G, 50G or 100G. The Type 1 technology is activated at PON1, meaning that packets of information are being transmitted back and forth between OLTs and ONUs via PON1 using the wavelength bands associated with the Type 1 PON technology.

The apparatus also comprises a second connection for connecting the apparatus 100 to PON2 101b. Via the second connection, apparatus 100 and PON2 101b are communicatively coupled. PON2 supports at least one type of PON access technology, Type 2, which may be one of GPON, XGS, 2.5G, 10G, 25G, 50G or 100G, wherein the Type 2 PON technology is different from the Type1 PON technology. The Type 2 technology is activated at PON1 101a, meaning that packets of information are being transmitted back and forth between OLTs and ONTs via PON2 101b using the wavelength bands associated with the Type 2 PON technology. The Type 1 technology is also supported at PON2. The Type 1 technology is in a 'stand-by' mode, wherein packets of information are not being transmitted back and forth between OLTs and ONTs via PON2 101b using the wavelength bands associated with the Type 2 PON technology. Standby mode may in some embodiments not covered by the scope of the claims correspond to packets of information being sent from ONTs via the PON, but not from OLTs to the ONTs via the PON. In these embodiments, the packets of information sent to the OLTs are not interpreted by the OLTs. Standby mode corresponds in the present invention to packets of information not being carried at all via the PON.

The apparatus further comprises means for determining that an error has occurred in PON1 101a. The error may in some embodiments comprise at least one of a physical disturbance to a fiber optical cable of PON1 101a, a failure of a fiber optical cable of PON1 101a, the planned turning off of PON1 101a, a failure of a connection port of a fiber optical cable of PON1 101a, or a malfunction of software or a power supply relating to PON1 101a. The malfunction of software relating to PON1 101a may comprise a software crash of an OLT that comprises PON1 101a. The malfunction of a power supply relating to PON1 101a may comprise a failure of a power supply to an OLT that comprises PON1 101a. The means for determining that an error has occurred in PON1 may comprise a computer at the apparatus. Determining that an error has occurred may include the apparatus monitoring signals received at the PON1 101a e.g. from an OLT. The error may be determined based on information received via the first connection from PON1.

The apparatus further comprises means for, upon detecting that the error has occurred, activating the Type 1 technology at PON2 101b such that packets of information are being transmitted back and forth between OLTs and ONUs via both Type1 and Type 2 PON access technologies at PON2. The activating of Type 1 technology at PON2 101b is done via the second connection.

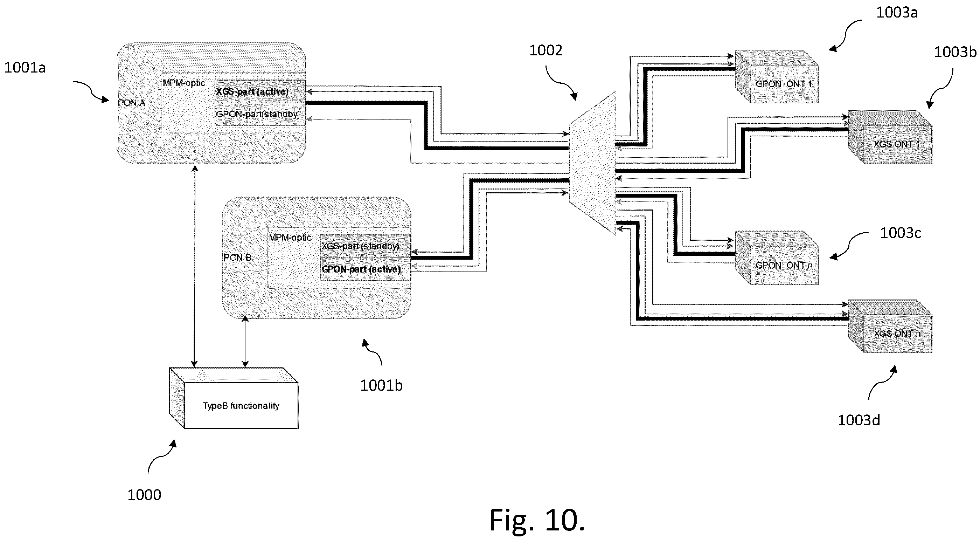

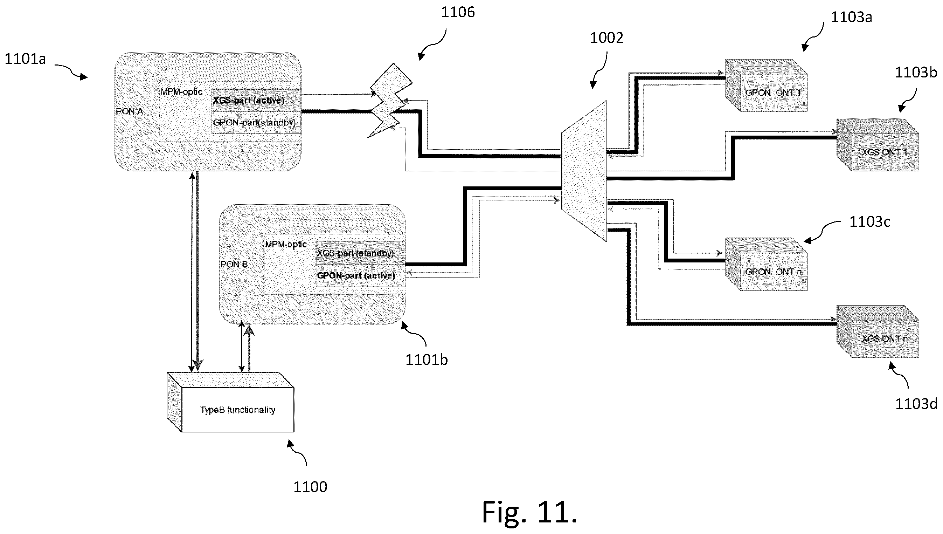

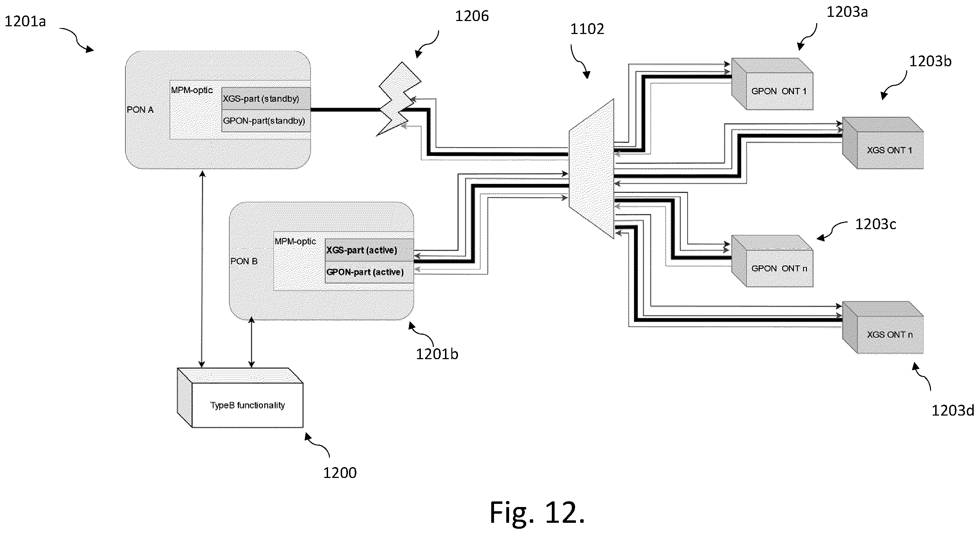

Such a network configuration is discussed in relation to Figures 10-12 below. Figure 10 shows the network configuration at a first instance in time. Figure 11 shows the network configuration at a second instance in time which is later than the first instance in time. Figure 12 shows the network configuration at a third instance in time which is later than the second instance in time. Corresponding reference numerals (i.e. 1001a, 1101a and 1201a) show the same elements of the network configuration at a later stage in the process of determining and remedying an error.

Figure 10 shows a network configuration in accordance with embodiments of the present disclosure. The network configuration comprises an apparatus 1000 a first PON 1001a and a second PON 1001b, a splitter 1002, and four ONTs 1003a-d. ONTs 1003a and 1003c are configured to operate using the GPON PON access technology. ONTs 1003b and 1003d are configured to operate using the XGS PON access technology. PON 1001a supports both GPON and XGS technologies, but in Figure 10 is only active on XGS and in a stand-by mode on GPON. Being in a stand-by mode on GPON comprises being capable of being active on the GPON PON access technology but not yet actively transporting any signals on the GPON PON access technology. PON 1001b supports both GPON and XGS technologies, but in Figure 10 is active on GPON and in a stand-by mode on XGS. PON 1001b is therefore active on a different PON access technology than PON 1001a but supports the PON access technology that is active on PON 1001a. ONTs 1003a and 1003d are actively communicating via PON 1001b and ONTs 1003b and 1003c are actively communicating via PON 1001a. It will be appreciated that although GPON and XGS are the PON access technologies shown in Figure 10, other PON access technologies are also possible. In some embodiments, the PON access technology active at 1001a or 1001b may correspond to one of GPON, XGS, 2.5G, 10G, 25G, 50G or 100G. Apparatus 1000 is communicatively coupled to both PON 1001a and PON 1001b via a first connection and a second connection respectively.

Figure 11 depicts the network configuration of figure 10 wherein an error 1106 has occurred in PON 1001a (PON 1101a). The error 1106 occurring in PON 1101a may represent PON 1101a being wholly or partially unable to transmit upstream or downstream messages on its active PON technology, in this case, XGS. In some embodiments, the error may comprise at least one of: a physical disturbance to a fiber optical cable of PON 1101a, a failure of a fiber optical cable of PON 1101a, the planned turning off PON 1101a, a failure of a connection port of a fiber optical cable of PON 1101a, or a malfunction of software or a power supply relating to PON 1101a. The apparatus 1100 comprises means for determining that the error has occurred at PON 1101a. In some implementations, the means may comprise means for monitoring at least one uplink signal received by the PON 1101a. The apparatus 1100 further comprises means for instructing PON 1100b, upon detection of the error 1106, to become active on the XGS technology. In some embodiments, the apparatus 1100 may comprise at least one processor and non-transitory memory including instructions that when executed by the least one processor, cause the apparatus to determine that the error 1106 has occurred in PON 1101a, and subsequently to instruct PON 1101b to become active on the XGS technology.

Figure 12 depicts the network configuration of Figure 11 wherein PON 1201b (PON 1101b) has been instructed to be active on the XGS PON access technology. PON 1201b is now active on both XGS and GPON technologies, therefore network traffic has been restored to ONTs 1203b and 1203d. In some implementations, the apparatus may instruct PON 1201a to enter standby mode on XGS in response to activating PON 1201b on XGS.

Referring again to Figure 10, as PON 1001a and 1001b were active on different PON access technologies and in a stand-by mode for the other PON technologies in use across the network configuration, in the event of an error occurring in one of the PONs (error 1106 in Figure 11) only the network traffic corresponding to one PON access technology needed to be switched from a first PON to a second PON in order to fully restore upstream and downstream network traffic. In existing type B functionality, as shown in figures 7, 8 and 9, as all PON technologies shown were active on a single PON 701a, in the event of an error 806 in the PON 701a, network traffic corresponding to all PON access technologies needed to be switched to PON 901b in order to restore upstream and downstream signal traffic.

By only having to switch network traffic corresponding to a single PON access technology, in the event of a PON error, the computing resources required to restore the flow of network traffic is reduced. Correspondingly, making use of limited available resources, the switching of PONs to restore full network traffic is more likely to be performed within the strict time constraints required to avoid disruption to services making use of the network.

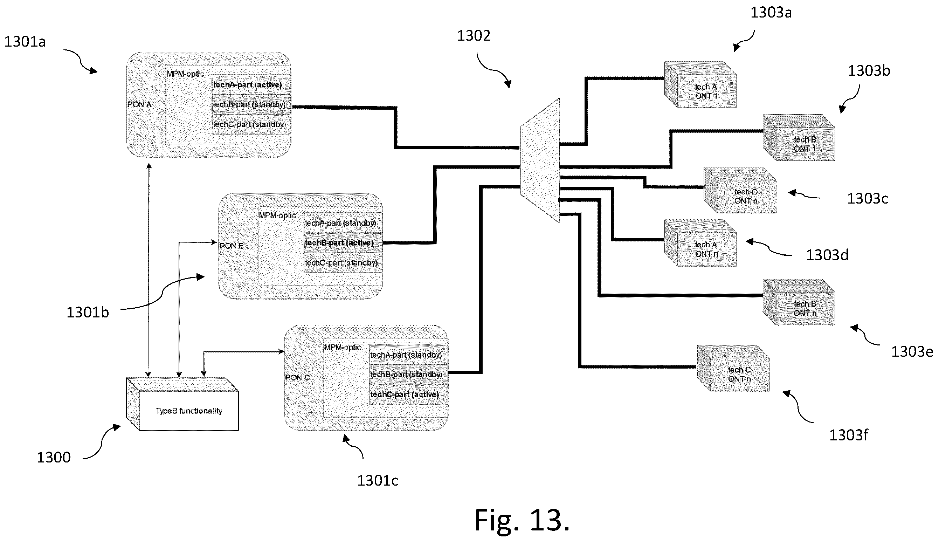

Although the above examples discuss the use of only 2 different PON access technologies, the technology disclosed herein is also applicable to configurations wherein more than two different PON access technologies are used. For example, Figure 13 shows a network architecture wherein 3 PON standard access technologies are used in the network, comprising an apparatus 1300, 3 PONs, PON 1301a, PON 1301b, and PON 1301c, a splitter 1302, and 6 ONTs, ONTs 1303a-f. ONTs 1303a and 1303d are configured to use PON access technology A. ONTs 1303b and 1303e are configured to use PON access technology B. ONTS 1303c and 1303f are configured to use PON access technology C. PON 1301a is active on PON access technology A and on standby for standard access technologies B and C. PON 1301b is active on PON standard access technology B and on standby for standard access technologies A and C. PON 1301c is active on PON standard access technology C and on standby for standard access technologies A and B. Apparatus 1300 is communicatively coupled to the 3 PONs 1301a-c and comprises means to detect errors in each of the PONs 1301a-c. Apparatus 1300 further comprises means to, upon detection of an error occurring at a particular PON, remove PON standard access technologies from stand-by mode at each of the PONs depending on the location of the error.

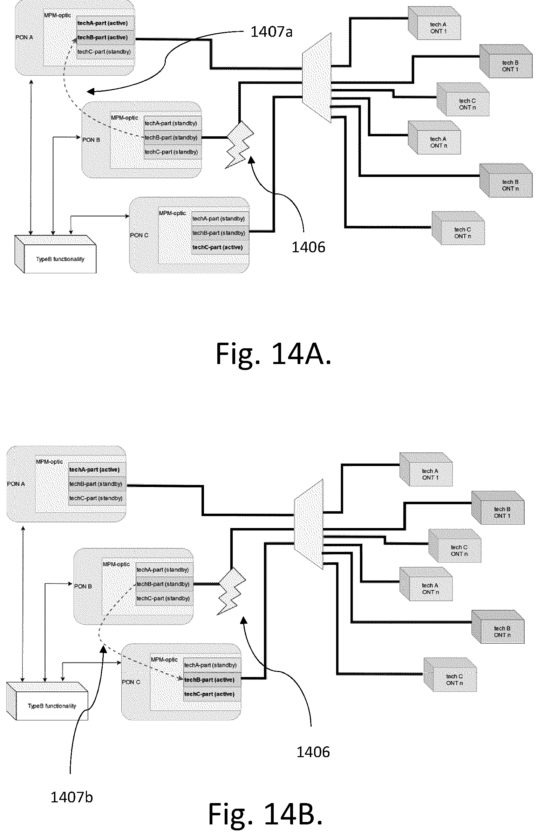

Figures 14A and 14B show the network configuration of Figure 13 wherein an error 1406 has occurred. As discussed above, upon the detection of an error in the PON 1301b, the apparatus 1300 may instruct another PON to become active on the PON standard access technology B, that was previously active on PON 1301b although network traffic has now been interrupted. As both PON 1301a and 1301c support PON standard access technology B, the apparatus 1300, in some embodiments, may select one of PON 1301a or 1301c to become active on PON standard access technology B based on a status of PON 1301a and/or PON 1301c. For instance, a status may comprise a current network traffic level at PON 1301a and/or PON 1301c.

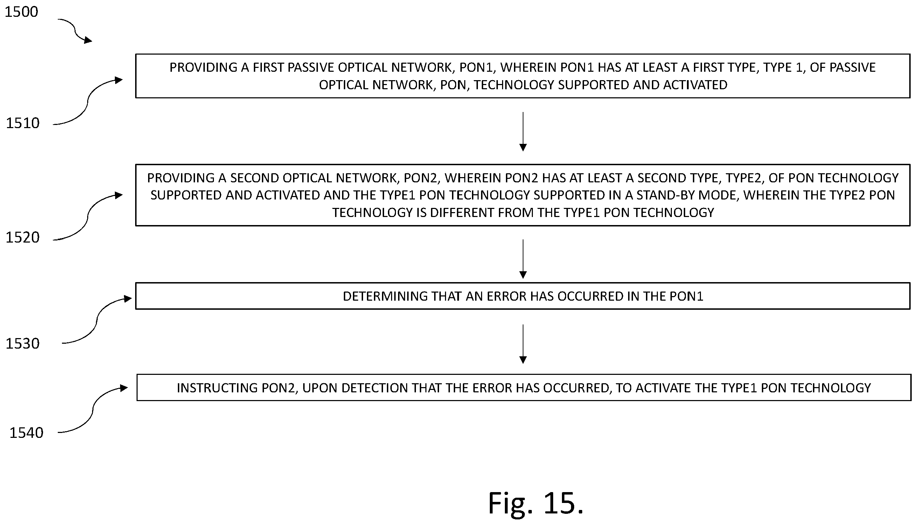

Figure 15 shows, by way of example, a flowchart of a method 1500 according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

The method comprises a first operation 1510 of providing a first passive optical network, PON1, wherein PON1 has at least a first type, Type 1, of passive optical network, PON, technology supported and activated.

The method comprises a second operation 1520 of providing a second optical network, PON2, wherein PON2 has at least a second type, Type2, of PON technology supported and activated and the Type1 PON technology supported in a stand-by mode, wherein the Type2 PON technology is different from the Type1 PON technology.

The method comprises a third operation 1530 of determining that an error has occurred in the PON1.

The method comprises a fourth operation 1540 of instructing PON2, upon detection that the error has occurred, to activate the Type1 PON technology.

The error that has occurred in the PON1 may optionally comprise the PON1 being wholly or partially unable to transmit upstream or downstream messages on its active Type1 PON technology.

The error that has occurred in the PON1 may optionally comprise at least one of a physical disturbance to a fiber optical cable of the PON1, a failure of a fiber optical cable of the PON1, the planned turning of the PON1, a failure of a connection port of a fiber optical cable of the PON1, or a malfunction of software or a power supply relating to the PON1.

The Type1 PON technology and/or Type 2 technology may optionally correspond to one of the following access technologies: GPON, XGS, 2.5G, 10G, 25G, 50G or 100G.

Determining that the error has occurred may optionally comprise monitoring at least one uplink signal received by the PON1.

### Example Apparatus

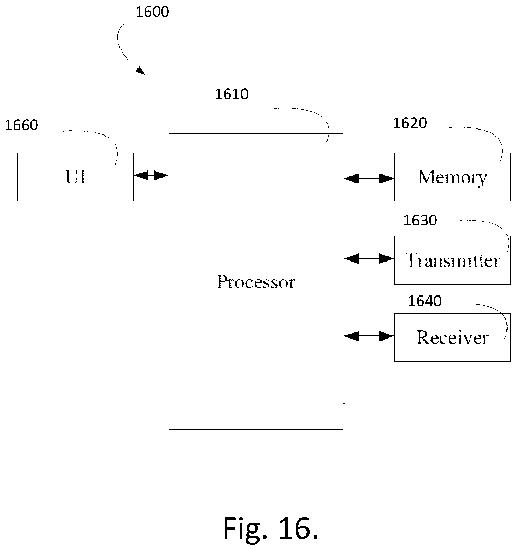

Figure 16 shows, by way of example, a block diagram of an apparatus capable of performing the method(s) as disclosed herein. Illustrated is device 1600, which may comprise, for example, an apparatus such as apparatus 100, 400, 500a-c, 1000, 1100, 1200, or 1300. Comprised in device 1600 is processor 1010, which may comprise, for example, a single- or multi-core processor wherein a single-core processor comprises one processing core and a multi-core processor comprises more than one processing core. Processor 1610 may comprise, in general, a control device. Processor 1610 may comprise more than one processor. Processor 1610 may be a control device. Processor 1610 may be means for performing method steps in device 1600. Processor 1610 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a network node, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 1600 may comprise memory 1620. Memory 1620 may comprise random-access memory and/or permanent memory. Memory 1620 may comprise at least one RAM chip. Memory 1620 may comprise solid-state, magnetic, optical and/or holographic memory, for example. Memory 1620 may be at least in part accessible to processor 1610. Memory 1620 may be at least in part comprised in processor 1610. Memory 1620 may be means for storing information. Memory 1620 may comprise computer instructions that processor 1610 is configured to execute. When computer instructions configured to cause processor 1610 to perform certain actions are stored in memory 1620, and device 1600 overall is configured to run under the direction of processor 1610 using computer instructions from memory 1620, processor 1610 and/or its at least one processing core may be considered to be configured to perform said certain actions. Memory 1620 may be at least in part external to device 1600 but accessible to device 1600.

Device 1000 may comprise a transmitter 1630. Device 1600 may comprise a receiver 1640. Transmitter 1630 and receiver 1640 may be configured to transmit and receive, respectively. Transmitter 1630 may comprise more than one transmitter. Receiver 1640 may comprise more than one receiver. Transmitter 1630 and/or receiver 1640 may be configured to operate in accordance with a global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 1600 may comprise user interface, UI, 1660.

Processor 1610 may be furnished with a transmitter arranged to output information from processor 1610, via electrical leads internal to device 1600, to other devices comprised in device 1600. Such a transmitter may comprise a serial bus transmitter arranged to, for example, output information via at least one electrical lead to memory 1620 for storage therein. Alternatively to a serial bus, the transmitter may comprise a parallel bus transmitter. Likewise processor 1610 may comprise a receiver arranged to receive information in processor 1610, via electrical leads internal to device 1600, from other devices comprised in device 1600. Such a receiver may comprise a serial bus receiver arranged to, for example, receive information via at least one electrical lead from receiver 1640 for processing in processor 1610. Alternatively to a serial bus, the receiver may comprise a parallel bus receiver.

Processor 1610, memory 1620, transmitter 1630, receiver 1640, and/or UI 1660 may be interconnected by electrical leads internal to device 1600 in a multitude of different ways. For example, each of the aforementioned devices may be separately connected to a master bus internal to device 1600, to allow for the devices to exchange information. However, as the skilled person will appreciate, this is only one example and depending on the embodiment various ways of interconnecting at least two of the aforementioned devices may be selected.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above-described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

## Claims

1. An apparatus (1600), comprising
a first port connectable to a first passive optical network, PON1, (101a, 401a, 701a, 1001a, 1101a, 1201a, 1301a) wherein PON1 has at least a first type, Type 1, of passive optical network, PON, technology supported and activated;
a second port connectable to a second optical network, PON2, (101b, 401b, 701b, 1001b, 1101b, 1201b, 1301b) wherein PON2 has at least a second type, Type2, of PON technology supported and activated and the Type1 PON technology supported in a stand-by mode, wherein the Type2 PON technology is different from the Type1 PON technology;
the apparatus comprising:
means for determining that an error has occurred in the PON1; and
means for instructing PON2, upon detection that the error has occurred, to activate the Type1 PON technology,
wherein the Type1 PON technology supported in stand-by mode comprises the PON2 being capable of being active on the Type1 PON technology but not yet actively transporting any signals on the Type1 PON technology.

2. The apparatus of claim 1, wherein
the error that has occurred in the PON1 comprises the PON1 being wholly or partially unable to transmit upstream or downstream messages on its active Type1 PON technology.

3. The apparatus of any preceding claim, wherein
the error comprises at least one of the following:
a physical disturbance to a fiber optical cable of PON1,
a failure of a fiber optical cable of PON1,
the planned turning off of PON1,
a failure of a connection port of a fiber optical cable of PON1, or
a malfunction of software or a power supply relating to PON1.

4. The apparatus of any preceding claim, wherein
Type1 PON technology and/or Type2 PON technology corresponds to one of the following PON access technologies: GPON, XGS, 2.5G, 10G, 25G, 50G or 100G.

5. The apparatus of any preceding claim, wherein
the means for detecting that the error has occurred comprises means for monitoring at least one uplink signal received by the PON1.

6. The apparatus of any preceding claim, wherein
the Type1 PON technology is suitable for transmitting at least one signal having a first wavelength and the Type2 PON technology is suitable for transmitting at least one signal having a second wavelength, the first wavelength and the second wavelength being different.

7. The apparatus of any preceding claim, further comprising
at least one processor and at least one memory including instructions, the at least one memory and the instructions configured to, with the at least one processor, cause the apparatus to:
determine that the error has occurred in the PON1;
instruct PON2, upon detection that the error has occurred, to activate the Type1 PON technology.

8. A system, comprising:
the apparatus of any preceding claim; and
a first passive optical network, PON1, and a second passive optical network, PON2.

9. A method (1500) comprising:
providing (1510) a first passive optical network, PON1, (101a, 401a, 701a, 1001a, 1101a, 1201a, 1301a) wherein PON1 has at least a first type, Type 1, of passive optical network, PON, technology supported and activated;
providing (1520) a second optical network, PON2, (101b, 401b, 701b, 1001b, 1101b, 1201b, 1301b) wherein PON2 has at least a second type, Type2, of PON technology supported and activated and the Type1 PON technology supported in a stand-by mode, wherein the Type2 PON technology is different from the Type1 PON technology;
determining (1530) that an error has occurred in the PON1; and
instructing (1540) PON2, upon detection that the error has occurred, to activate the Type1 PON technology,
wherein the Type1 PON technology supported in stand-by mode comprises the PON2 being capable of being active on the Type1 PON technology but not yet actively transporting any signals on the Type1 PON technology.

10. The method of claim 9, wherein
the error that has occurred in the PON1 comprises the PON1 being wholly or partially unable to transmit upstream or downstream messages on its active Type1 PON technology.

11. The method of claims 9 or 10, wherein
the error comprises at least one of the following:
a physical disturbance to a fiber optical cable of PON1,
a failure of a fiber optical cable of PON1,
the planned turning off of PON1,
a failure of a connection port of a fiber optical cable of PON1, or
a malfunction of software or a power supply relating to PON1.

12. The method of any of claims 9 to 11, wherein
Type1 PON technology and/or Type2 PON technology corresponds to one of the following PON access technologies: GPON, XGS, 2.5G, 10G, 25G, 50G or 100G.

13. The method of any of claims 9 to 12, wherein
determining that the error has occurred comprises monitoring at least one uplink signal received by the PON1.

14. A computer program comprising instructions which, when executed by the processor of the apparatus of claim 7, cause the apparatus to:
detect a first passive optical network, PON1, (101a, 401a, 701a, 1001a, 1101a, 1201a, 1301a) wherein PON1 has at least a first type, Type 1, of passive optical network, PON, technology supported and activated;
detect a second optical network, PON2, (101b, 401b, 701b, 1001b, 1101b, 1201b, 1301b) wherein PON2 has at least a second type, Type2, of PON technology supported and activated and the Type1 PON technology supported in a stand-by mode, wherein the Type2 PON technology is different from the Type1 PON technology;
determine (1530) that an error has occurred in the PON1;
instruct (1540) PON2, upon detection that the error has occurred, to activate the Type1 PON technology,
wherein the Type1 PON technology supported in stand-by mode comprises the PON2 being capable of being active on the Type1 PON technology but not yet actively transporting any signals on the Type1 PON technology.

## Patentansprüche

1. Vorrichtung (1600), umfassend
einen ersten Anschluss, der mit einem ersten passiven optischen Netzwerk, PON1, (101a, 401a, 701a, 1001a, 1101a, 1201a, 1301a) verbindbar ist, wobei PON1 mindestens einen ersten Typ, Typ 1, einer Technologie eines passiven optischen Netzwerks, PON, aufweist, der unterstützt und aktiviert ist;
einen zweiten Anschluss, der mit einem zweiten optischen Netzwerk, PON2, (101b, 401b, 701b, 1001b, 1101b, 1201b, 1301b) verbindbar ist, wobei PON2 mindestens einen zweiten Typ, Typ 2, einer PON-Technologie, der unterstützt und aktiviert ist, und die in einem Standby-Modus unterstützte PON-Technologie vom Typ 1 aufweist, wobei die PON-Technologie vom Typ 2 von der PON-Technologie vom Typ 1 verschieden ist;
wobei die Vorrichtung umfasst:
Mittel zum Bestimmen, dass ein Fehler in PON1 aufgetreten ist; und
Mittel zum Anweisen von PON2, bei Erkennung, dass der Fehler aufgetreten ist, die PON-Technologie vom Typ 1 zu aktivieren,
wobei die im Standby-Modus unterstützte PON-Technologie vom Typ 1 umfasst, dass PON2 in der Lage ist, auf der PON-Technologie vom Typ 1 aktiv zu sein, aber noch nicht aktiv Signale auf der PON-Technologie vom Typ 1 überträgt.

2. Vorrichtung nach Anspruch 1, wobei
der in PON1 aufgetretene Fehler umfasst, dass PON1 ganz oder teilweise nicht in der Lage ist, Upstream- oder Downstream-Nachrichten auf seiner aktiven PON-Technologie vom Typ 1 zu übertragen.

3. Vorrichtung nach einem der vorhergehenden Ansprüche, wobei
der Fehler mindestens eines der Folgenden umfasst:
eine physische Störung eines Glasfaserkabels von PON1,
einen Ausfall eines Glasfaserkabels von PON1,
das geplante Abschalten von PON1,
einen Ausfall eines Verbindungsanschlusses eines Glasfaserkabels von PON1, oder
eine Fehlfunktion einer Software oder einer Stromversorgung in Bezug auf PON1.

4. Vorrichtung nach einem der vorhergehenden Ansprüche, wobei
die PON-Technologie vom Typ 1 und/oder die PON-Technologie vom Typ 2 einer der folgenden PON-Zugangstechnologien entspricht: GPON, XGS, 2.5G, 10G, 25G, 50G oder 100G.

5. Vorrichtung nach einem der vorhergehenden Ansprüche, wobei
die Mittel zum Erkennen, dass der Fehler aufgetreten ist, Mittel zum Überwachen mindestens eines von PON1 empfangenen Uplink-Signals umfassen.

6. Vorrichtung nach einem der vorhergehenden Ansprüche, wobei
die PON-Technologie vom Typ 1 geeignet ist, mindestens ein Signal mit einer ersten Wellenlänge zu übertragen, und die PON-Technologie vom Typ 2 geeignet ist, mindestens ein Signal mit einer zweiten Wellenlänge zu übertragen, wobei die erste Wellenlänge und die zweite Wellenlänge voneinander verschieden sind.

7. Vorrichtung nach einem der vorhergehenden Ansprüche, ferner umfassend
mindestens einen Prozessor und mindestens einen Speicher, der Anweisungen enthält, wobei der mindestens eine Speicher und die Anweisungen dazu ausgelegt sind, mit dem mindestens einen Prozessor die Vorrichtung zu veranlassen:
zu bestimmen, dass der Fehler in PON1 aufgetreten ist;
PON2 anzuweisen, bei Erkennung, dass der Fehler aufgetreten ist, die PON-Technologie vom Typ 1 zu aktivieren.

8. System, umfassend:
die Vorrichtung nach einem der vorhergehenden Ansprüche; und
ein erstes passives optisches Netzwerk, PON1, und ein zweites passives optisches Netzwerk, PON2.

9. Verfahren (1500), umfassend:
Bereitstellen (1510) eines ersten passiven optischen Netzwerks, PON1, (101a, 401a, 701a, 1001a, 1101a, 1201a, 1301a), wobei PON1 mindestens einen ersten Typ, Typ 1, einer Technologie eines passiven optischen Netzwerks, PON, aufweist, der unterstützt und aktiviert ist;
Bereitstellen (1520) eines zweiten optischen Netzwerks, PON2, (101b, 401b, 701b, 1001b, 1101b, 1201b, 1301b), wobei PON2 mindestens einen zweiten Typ, Typ 2, einer PON-Technologie, der unterstützt und aktiviert ist, und die in einem Standby-Modus unterstützte PON-Technologie vom Typ 1 aufweist, wobei die PON-Technologie vom Typ 2 von der PON-Technologie vom Typ 1 verschieden ist;
Bestimmen (1530), dass ein Fehler in PON1 aufgetreten ist; und
Anweisen (1540) von PON2, bei Erkennung, dass der Fehler aufgetreten ist, die PON-Technologie vom Typ 1 zu aktivieren,
wobei die im Standby-Modus unterstützte PON-Technologie vom Typ 1 umfasst, dass PON2 in der Lage ist, auf der PON-Technologie vom Typ 1 aktiv zu sein, aber noch nicht aktiv Signale auf der PON-Technologie vom Typ 1 überträgt.

10. Verfahren nach Anspruch 9, wobei
der in PON1 aufgetretene Fehler umfasst, dass PON1 ganz oder teilweise nicht in der Lage ist, Upstream- oder Downstream-Nachrichten auf seiner aktiven PON-Technologie vom Typ 1 zu übertragen.

11. Verfahren nach Anspruch 9 oder 10, wobei
der Fehler mindestens eines der Folgenden umfasst:
eine physische Störung eines Glasfaserkabels von PON1,
einen Ausfall eines Glasfaserkabels von PON1,
das geplante Abschalten von PON1,
einen Ausfall eines Verbindungsanschlusses eines Glasfaserkabels von PON1, oder
eine Fehlfunktion einer Software oder einer Stromversorgung in Bezug auf PON1.

12. Verfahren nach einem der Ansprüche 9 bis 11, wobei
die PON-Technologie vom Typ 1 und/oder die PON-Technologie vom Typ 2 einer der folgenden PON-Zugangstechnologien entspricht: GPON, XGS, 2.5G, 10G, 25G, 50G oder 100G.

13. Verfahren nach einem der Ansprüche 9 bis 12, wobei
das Bestimmen, dass der Fehler aufgetreten ist, ein Überwachen mindestens eines von PON1 empfangenen Uplink-Signals umfasst.

14. Computerprogramm, umfassend Anweisungen, die bei Ausführung durch den Prozessor der Vorrichtung nach Anspruch 7 die Vorrichtung veranlassen:
ein erstes passives optisches Netzwerk, PON1, (101a, 401a, 701a, 1001a, 1101a, 1201a, 1301a) zu erkennen, wobei PON1 mindestens einen ersten Typ, Typ 1, einer Technologie eines passiven optischen Netzwerks, PON, aufweist, der unterstützt und aktiviert ist;
ein zweites optisches Netzwerk, PON2, (101b, 401b, 701b, 1001b, 1101b, 1201b, 1301b) zu erkennen, wobei PON2 mindestens einen zweiten Typ, Typ 2, einer PON-Technologie, der unterstützt und aktiviert ist, und die in einem Standby-Modus unterstützte PON-Technologie vom Typ 1 aufweist, wobei die PON-Technologie vom Typ 2 von der PON-Technologie vom Typ 1 verschieden ist;
zu bestimmen (1530), dass ein Fehler in PON1 aufgetreten ist;
PON2 anzuweisen (1540), bei Erkennung, dass der Fehler aufgetreten ist, die PON-Technologie vom Typ 1 zu aktivieren,
wobei die im Standby-Modus unterstützte PON-Technologie vom Typ 1 umfasst, dass PON2 in der Lage ist, auf der PON-Technologie vom Typ 1 aktiv zu sein, aber noch nicht aktiv Signale auf der PON-Technologie vom Typ 1 überträgt.

## Revendications

1. Appareil (1600), comprenant
un premier port apte à être connecté à un premier réseau optique passif, PON1, (101a, 401a, 701a, 1001a, 1101a, 1201a, 1301a), dans lequel PON1 possède au moins un premier type, Type 1, de technologie de réseau optique passif, PON, pris en charge et activé ;
un deuxième port apte à être connecté à un deuxième réseau optique, PON2, (101b, 401b, 701b, 1001b, 1101b, 1201b, 1301b), dans lequel PON2 possède au moins un deuxième type, Type 2, de technologie de PON pris en charge et activé et la technologie de PON de Type 1 prise en charge dans un mode de veille, dans lequel la technologie de PON de Type 2 est différente de la technologie de PON de Type 1 ;
l'appareil comprenant :
des moyens pour déterminer qu'une erreur s'est produite dans PON1 ; et
des moyens pour ordonner à PON2, lors de la détection que l'erreur s'est produite, d'activer la technologie de PON de Type 1,
dans lequel la technologie de PON de Type 1 prise en charge dans un mode de veille comprend le fait que PON2 est capable d'être actif sur la technologie de PON de Type 1 mais ne transporte pas encore activement de signaux sur la technologie de PON de Type 1.

2. Appareil selon la revendication 1, dans lequel
l'erreur qui s'est produite dans PON1 comprend le fait que PON1 est totalement ou partiellement incapable de transmettre des messages montants ou descendants sur sa technologie de PON de Type 1 active.

3. Appareil selon l'une quelconque des revendications précédentes, dans lequel
l'erreur comprend au moins l'un des éléments suivants :
une perturbation physique d'un câble à fibre optique de PON1,
une défaillance d'un câble à fibre optique de PON1,
l'arrêt planifié de PON1,
une défaillance d'un port de connexion d'un câble à fibre optique de PON1, ou
un dysfonctionnement d'un logiciel ou d'une alimentation électrique relatif à PON1.

4. Appareil selon l'une quelconque des revendications précédentes, dans lequel
la technologie de PON de Type 1 et/ou la technologie de PON de Type 2 correspond à l'une des technologies d'accès PON suivantes : GPON, XGS, 2.5G, 10G, 25G, 50G ou 100G.

5. Appareil selon l'une quelconque des revendications précédentes, dans lequel
les moyens pour détecter que l'erreur s'est produite comprennent des moyens pour surveiller au moins un signal montant reçu par PON1.

6. Appareil selon l'une quelconque des revendications précédentes, dans lequel
la technologie de PON de Type 1 est apte à transmettre au moins un signal ayant une première longueur d'onde et la technologie de PON de Type 2 est apte à transmettre au moins un signal ayant une deuxième longueur d'onde, la première longueur d'onde et la deuxième longueur d'onde étant différentes.

7. Appareil selon l'une quelconque des revendications précédentes, comprenant en outre
au moins un processeur et au moins une mémoire comportant des instructions, l'au moins une mémoire et les instructions étant configurées pour, avec l'au moins un processeur, amener l'appareil à :
déterminer que l'erreur s'est produite dans PON1 ;
ordonner à PON2, lors de la détection que l'erreur s'est produite, d'activer la technologie de PON de Type 1.

8. Système, comprenant :
l'appareil selon l'une quelconque des revendications précédentes ; et
un premier réseau optique passif, PON1, et un deuxième réseau optique passif, PON2.

9. Procédé (1500) comprenant :
la fourniture (1510) d'un premier réseau optique passif, PON1, (101a, 401a, 701a, 1001a, 1101a, 1201a, 1301a), dans lequel PON1 possède au moins un premier type, Type 1, de technologie de réseau optique passif, PON, pris en charge et activé ;
la fourniture (1520) d'un deuxième réseau optique, PON2, (101b, 401b, 701b, 1001b, 1101b, 1201b, 1301b), dans lequel PON2 possède au moins un deuxième type, Type 2, de technologie de PON pris en charge et activé et la technologie de PON de Type 1 prise en charge dans un mode de veille, dans lequel la technologie de PON de Type 2 est différente de la technologie de PON de Type 1 ;
la détermination (1530) du fait qu'une erreur s'est produite dans PON1 ; et
le fait d'ordonner (1540) à PON2, lors de la détection que l'erreur s'est produite, d'activer la technologie de PON de Type 1,
dans lequel la technologie de PON de Type 1 prise en charge dans un mode de veille comprend le fait que PON2 est capable d'être actif sur la technologie de PON de Type 1 mais ne transporte pas encore activement de signaux sur la technologie de PON de Type 1.

10. Procédé selon la revendication 9, dans lequel
l'erreur qui s'est produite dans PON1 comprend le fait que PON1 est totalement ou partiellement incapable de transmettre des messages montants ou descendants sur sa technologie de PON de Type 1 active.

11. Procédé selon la revendication 9 ou 10, dans lequel
l'erreur comprend au moins l'un des éléments suivants :
une perturbation physique d'un câble à fibre optique de PON1,
une défaillance d'un câble à fibre optique de PON1,
l'arrêt planifié de PON1,
une défaillance d'un port de connexion d'un câble à fibre optique de PON1, ou
un dysfonctionnement d'un logiciel ou d'une alimentation électrique relatif à PON1.

12. Procédé selon l'une quelconque des revendications 9 à 11, dans lequel
la technologie de PON de Type 1 et/ou la technologie de PON de Type 2 correspond à l'une des technologies d'accès PON suivantes : GPON, XGS, 2.5G, 10G, 25G, 50G ou 100G.

13. Procédé selon l'une quelconque des revendications 9 à 12, dans lequel
la détermination du fait que l'erreur s'est produite comprend la surveillance d'au moins un signal montant reçu par PON1.

14. Programme d'ordinateur comprenant des instructions qui, lorsqu'elles sont exécutées par le processeur de l'appareil selon la revendication 7, amènent l'appareil à :
détecter un premier réseau optique passif, PON1, (101a, 401a, 701a, 1001a, 1101a, 1201a, 1301a), dans lequel PON1 possède au moins un premier type, Type 1, de technologie de réseau optique passif, PON, pris en charge et activé ;
détecter un deuxième réseau optique, PON2, (101b, 401b, 701b, 1001b, 1101b, 1201b, 1301b), dans lequel PON2 possède au moins un deuxième type, Type 2, de technologie de PON pris en charge et activé et la technologie de PON de Type 1 prise en charge dans un mode de veille, dans lequel la technologie de PON de Type 2 est différente de la technologie de PON de Type 1 ;
déterminer (1530) qu'une erreur s'est produite dans PON1 ;
ordonner (1540) à PON2, lors de la détection que l'erreur s'est produite, d'activer la technologie de PON de Type 1,
dans lequel la technologie de PON de Type 1 prise en charge dans un mode de veille comprend le fait que PON2 est capable d'être actif sur la technologie de PON de Type 1 mais ne transporte pas encore activement de signaux sur la technologie de PON de Type 1.
